# NEUE EUROPÄISCHE PATENTSCHRIFT

(11) **EP 1 046 366 B2**
(45) Veröffentlichungstag und Bekanntmachung des Hinweises auf die Entscheidung über den Einspruch: **07.01.2009**
(45) Hinweis auf die Patenterteilung: 04.05.2005
(21) Anmeldenummer: 00810265.9
(22) Anmeldetag: 29.03.2000
(51) Int. Cl.: A47J 31/40

(54) **Einrichtung zum Zuführen von abgepackten Portionen gemahlenen Kaffees in eine Brüheinheit**
Device for feeding cartridges with grinded coffee to a brewing unit
Dispositif pour délivrer des cartouches de café moulu dans une unité de breuvage

(30) Priorität: 23.04.1999 CH 75399; 15.03.2000 CH 4912000
(43) Veröffentlichungstag der Anmeldung: 25.10.2000
(73) Patentinhaber: Saeco IPR Limited, Dublin 12 (IE)
(72) Erfinder: Schmed, Arthur, CH-8635 Oberdürnten (CH); Züllig, Heinz, CH-9244 Niederuzwil (CH)
(74) Vertreter: Rottmann, Maximilian

(56) Entgegenhaltungen:
- EP-A- 0 184 561
- EP-A- 0 208 092
- EP-A- 0 486 435
- EP-A- 1 002 490
- WO-A-94/03092
- CH-A- 471 570
- CH-A- 688 686
- FR-A- 1 564 088
- US-A- 3 812 273
- US-A- 4 724 752

## Beschreibung

Die vorliegende Erfindung betrifft eine Einrichtung zum Zuführen von abgepackten Portionen gemahlenen Kaffees in eine Brüheinheit.

Für die Herstellung eines Kaffeegetränkes wird im allgemeinen gemahlener Bohnenkaffeeverwendet. Nebst den herkömmlichen Filtermaschinen werden in der Regel halbautomatische oder vollautomatische Espressomaschinen zum Aufbrühen des Kaffeepulvers eingesetzt. Vollautomatische Espressomaschinen verfügen im allgemeinen über ein integriertes Mahlwerk zum Mahlen der Kaffeebohnen. In letzter Zeit hat sich auch das Aufbrühen von in einer Kapsel abgepacktem Pulverkaffe durchgesetzt. Der Vorteil solcher Kapseln liegt darin, dass sie gasdicht ausgebildet sind und das darin aufgenommene Kaffeepulver über einen längeren Zeitraum frisch halten können. Zum Aufbrühen dieser Kapseln sind Kaffeemaschinen vorgesehen, welche einen Kapselhafter zur Aufnahme der mit einer vordosierten Menge an gemahlenem Kaffeepulver gefüllten Kapsel aufweisen. Die Kapsel wird aufgestochen und anschliessend mittels unter Druck stehendem heissem Wasser zu einem Kaffeegetränk aufgebrüht. Nebst den Vorteilen von bekannten vorverpackten Kaffeeportionen besteht ein wesentlicher Nachteil darin, dass die Portionen -Kapseln- einzeln zugeführt werden müssen. So muss jede Kaffeeportion einzeln in den Kapselhafter eingelegt werden. Danach wird der Kapselhalter mittels eines Bajonettverschlusses in eine hierfür vorgesehene Aufnahmekammer gedrückt, bevor die Portion aufgestochen und mit unter Druck stehendem heissen Wasser aufgebrüht werden kann.

Durch die Notwendigkeit der Einzelzuführung weisen diese bekannten Maschinen eine geringe Kadenz auf und erfordern sowohl Präsenz als auch manuelle Aktivität einer Bedienungsperson.

Aus der EP 0041 657 ist eine Espressomaschine bekannt, welche vorproportionierte Portionen von gemahlenem Kaffee zum Aufbrühen eines Kaffeegetränkes verwendet. Die Kaffeeportionen sind auf einem Band angeordnet und werden mittels einervor und einer nach der Brühkammer angeordneten Transportrolle bewegt und der Brühkammer zugeführt, in welcher anschliessend das Kaffeegetränk aufgebrüht wird. Die frischen Kaffeeportionen sind in einem dafür vorgesehenen ersten Behälter aufbewahrt, währendem die ausgelaugten Portionen einem zweiten Behälter zugeführt werden.
Aus US-A-4724752 ist eine Maschine für die automatische Zubereitung eines Getränkes bekannt. Diese Maschine hat mehrere horizontal angeordnete Magazine zur Aufnahme von Portionenkapseln mit einer Endloskette am vorderen Ende. Auf der Vorderseite ist ein Verteiler angeordnet, der mittels eines Motors verdrehbar ist und Ausnehmungen zur Aufnahme der Portionenkapseln aufweist. Hierbei wird die Portionenkapsel mittels zusätlichen Transportmitteln zur Brüheinheit befördert.

Ausgehend von diesem Stand der Technik stellt sich die vorliegende Erfindung die Aufgabe, eine Einrichtung zum Zuführen von abgepackten Portionen von gemahlenem Kaffee in die Brühkammer einer Kaffeemaschine vorzuschlagen, die zur Aufnahme von unterschiedliche Kaffeeportionen geeignet ist und dabei einfach und ohne besonderen manuellen Aufwand zu bedienen ist.

Diese Aufgabe wird mit der Erfindung nach Anspruch 1 gelöst.

Weitere vorteilhafte Ausgestaltungen gehen aus den abhängigen Ansprüchen 2 bis 13 hervor.

Bei der Erfindung vorgeschlag, das Magazin derart auf einem Drehteller anzuordnen, dass durch Verdrehen des Drehtellers wahlweise eine der Kartuschen vertikal über die sich in der Ruhestellung befindliche Brühkammer der Brüheinheit bringbar ist. Dadurch können die einzelnen Kartuschen schnell und einfach in ihre Wirkstellung gebracht werden. Wenn in den einzelnen Kartuschen unterschiedliche Kaffeeportionen aufgenommen sind, können durch das Verdrehen des Drehtellers unterschiedlichen Kaffeeportionen zum Aufbrühen eines Kaffeegetränks ausgewählt werden.

Bei einem weiteren, bevorzugten Ausführungsbeispiel wird ein Schubladenelement vorgeschlagen, das zwischen dem Magazin für die Aufnahme der aufzubereitenden Kaffeeportionen und der Brüheinheit angeordnet ist. Durch ein solches Schubladenelement kann, unabhängig von den in den Kartuschen aufgenommenen Kaffeeportionen, eine spezifische Kaffeeportion zum Aufbrühen eines Kaffeegetränks verwendet werden.

Anhand der beigelegten Figuren wird ein Ausführungsbeispiel der Erfindung näher erläutert. Es zeigt:
Figur 1 eine perspektivische Seitenansicht der erfindungsgemässen Einrichtung;
Figur 2 einen Längsschnitt durch die Einrichtung gemäss Fig. 1;
Figur 3 eine Seitenansicht der Einrichtung gemäss Fig. 1;
Figur 4 eine Draufsicht auf ein Schubladenelement zum Zuführen einer einzelnen Kaffeeportion im ausgezogenen Zustand, und
Figur 5 eine Draufsicht auf das Schubladenelement gemäss Figur 5 im eingeschobenen Zustand.
Figur 6 einen Längsschnitt durch die Brüheinheit.

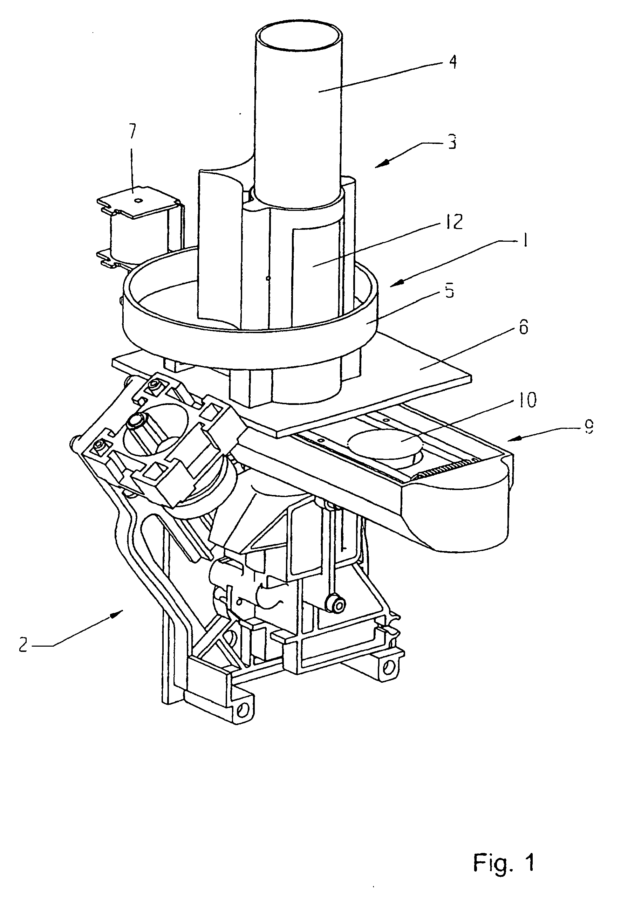

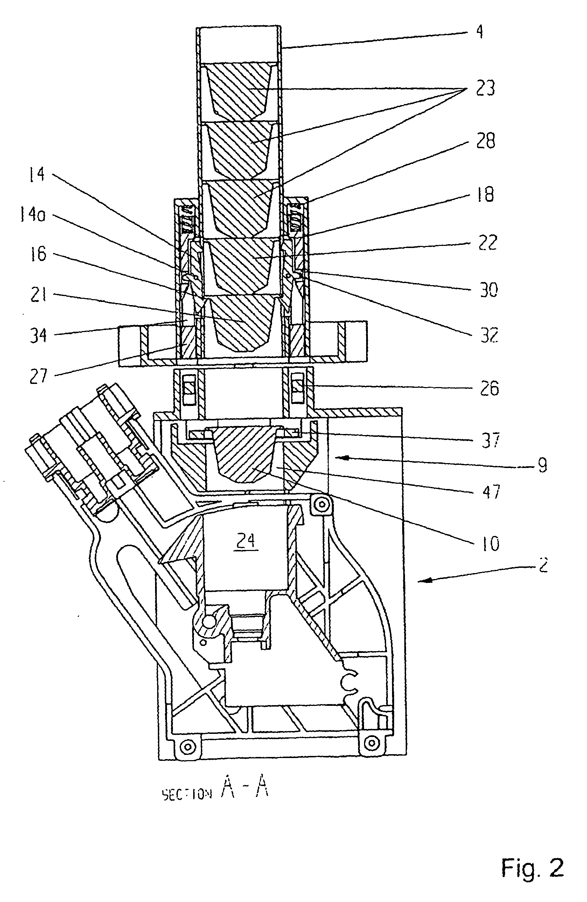

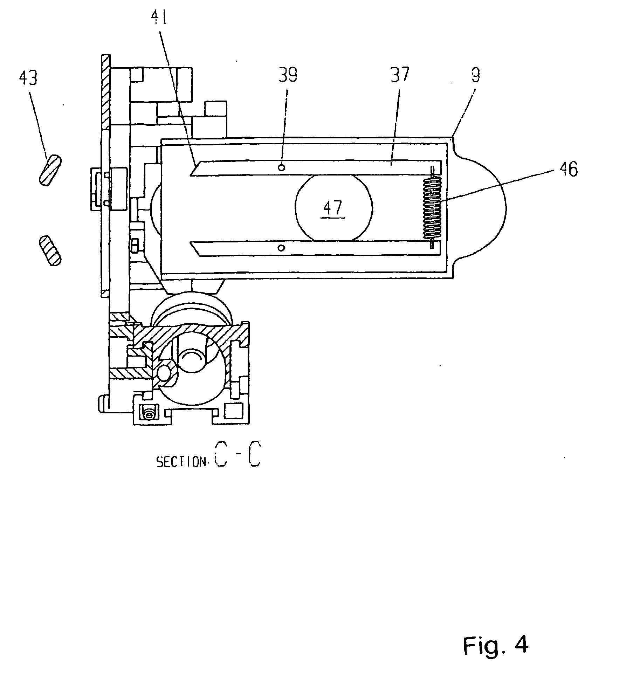

Die Figur 1 zeigt die Einrichtung 1 zum Zuführen von abgepackten Kaffeeportionen in eine Brüheinheit 2. Die Einrichtung 1 weist ein Magazin 3 auf, welches auf einem Drehteller 5 angeordnet ist und zur Aufnahme von vier Kartuschen ausgebildet ist, wobei im vorliegenden Fall nur eine Kartusche 4 eingezeichnet ist. Jede Kartusche kann eine Vielzahl von Kaffeeportionen aufnehmen. Das Vorsehen eines Magazins 3 zur Aufnahme von mehreren Kartuschen bringt den Vorteil mit sich, dass die einzelnen Kartuschen ggf. mit Kaffeeportionen unterschiedlichen Inhalts, namentlich mit unterschiedlichen Kaffeesorten zur Herstellung von Espresso, Ristretto, Cappuccino, Milchkaffe usw. bestückt werden können. Durch das Vorsehen von vier Kartuschen können demnach vier unterschiedliche Kaffeesorten in der Einrichtung 1 aufgenommen werden, wobei natürlich auch mehrere Kartuschen mit den gleichen Kaffeeportionen aufgefüllt werden können. Jede Kartusche ist mit Klinken versehen, die die Kaffeeportionen zurückzuhalten bestimmt sind und diese durch gesteuerte Betätigung einzeln freigeben. Diese Klinken werden anhand der Figuren 2 und 4 nachfolgend noch näher erläutert. Der Drehteller 5 ist auf einer Platte 6 angeordnet, wobei Rastelemente (nicht dargestellt) zum Arretieren und Positionieren des Drehtellers 5 vorgesehen sind. Diese Rastelemente rasten ein, wenn sich jeweils eine Kartusche direkt über der Brühkammer der Brüheinheit 2 befindet. Im vorliegenden Beispiel befindet sich die dargestellte Kartusche 4 in der Wirkstellung, aus der die Kaffeeportionen in die Brühkammer der Brüheinheit 2 überführt werden können. Da derartige Rastelemente bekannt sind, wurde auf deren Darstellung verzichtet. Auf der Platte 6 ist ausserdem ein Hebelmechanismus abgestützt, der über einen Elektromagneten 7 betätigbar ist. Unterhalb der Platte 6 ist ein Schubladenelement 9 angeordnet, welches der Aufnahme von einzelnen Kaffeeportionen 10 dient.

Vorzugsweise ist jede Kartusche mit einem Sichtfenster 12 versehen, welches dem Benutzer erlaubt, zu erkennen, welche Kaffeesorte in der entsprechenden Kartusche aufgenommen ist. Dadurch kann natürlich auch erkannt werden, welche Kaffeesorte sich gerade über der Brüheinheit 2 befindet und als nächstes zum Aufbrühen eines Kaffeegetränks verwendet wird. Zur Erkennung der jeweiligen Kaffeesorte können sich die Kaffeeportionen beispielsweise in farblicher Hinsicht unterscheiden. Denkbar ist jedoch auch, dass die einzelnen Kaffeeportionen mit einem Code versehen werden, der mit einem entsprechenden Lesegerät erfasst werden kann, so dass die Kaffeeportionen und insbesondere deren Inhalt auf elektronischem Wege erkannt werden kann. Diese Erkennung könnte beispielsweise dazu genutzt werden, auf einem Display anzuzeigen, welche Kaffeesorte zum Aufbrühen des nächsten Kaffeegetränks verwendet wird. Eine weitere Variante kann auch darin bestehen, dass der Benutzer über ein Bedienpanel vorgibt, welche Kaffeesorte aufgebrüht werden soll und die Einrichtung den Drehteller 5 elektromotorisch soweit verdreht, bis sich die mit der gewünschten Kaffeesorte bestückte Kartusche in der Wirkstellung über der Brüheinheit 2 befindet. Die dazu notwendigen Mittel sind jedoch nicht näher dargestellt.

Figur 2 zeigt einen Längsschnitt durch die Einrichtung 1 mitsamt der Brüheinheit 2. Der besseren Übersichtlichkeit wegen, ist bei den doppelt vorhandenen Elementen jeweils nur eines mit einem Bezugszeichen versehen. Aus dieser Darstellung sind Klinken 14 ersichtlich, welche einen Teil der Mittel zum einzelnen Abgeben der Kaffeeportionen darstellen. Die um eine zentrale Achse 14a drehbar gelagerten Klinken 14 sind doppeltwirkend, indem sie auf der Unterseite einen erste Auflagefläche 16 zum Fassen der für die Abgabe bereiten Kaffeeportion 21 aufweisen und auf der Oberseite mit einer zweiten Auflagefläche 18 zum Abstützen der nachfolgenden Kaffeeportion 22 versehen sind. In der hier dargestellten Position halten die Klinken 14 mit ihren unteren Auflageflächen 16 die unterste Kaffeeportion 21 an ihrem oberen Rand fest. Diese Kaffeeportion 10 liegt dabei genau vertikal über der Brühkammer 24 der Brüheinheit 2, so dass sie beim Freigeben unter Einwirkung der Schwerkraft in die Brühkammer fällt 24. Eine mit dem Elektromagneten 7 in Wirkverbindung stehende Wippe 26 ist ebenfalls ersichtlich. Um die Klinken 14 verschwenken zu können, sind vertikal verlaufende Betätigungsstangen 27 vorgesehen, welche von der Wippe 26 betätigbar sind. Die Klinken 14 sind mit Nokken 32 versehen, welche in Schlitze 30 der Betätigungsstangen 27 eingreifen so dass die Klinken 14 beim vertikalen Verschieben der Betätigungsstangen 27 um ihren Drehpunkt 14a verschwenkt werden. Die Betätigungsstangen 27 weisen zudem Ausnehmungen 34 auf, in welchen der untere Teil der Klinken 14 aufgenommen werden kann, damit die Klinken 14 soweit verschwenkt werden können, damit die unteren Auflageflächen 16 der Klinken 14 die zur Abgabe bereite Kaffeeportion 21 freigeben währenddem gleichzeitig die nächstfolgende Kaffeeportion 22 auf den oberen Auflageflächen 18 zur Auflage kommt. Durch die über den Elektromagneten 7 (Fig. 1) betätigte Wippe 26 können die Betätigungsstangen 26 entgegen der Federkraft nach oben gefahren werden, wodurch die rechte Klinke im Gegenuhrzeigersinn und die linke Klinke im Uhrzeigersinn verschwenkt wird. Durch das Verschwenken der Klinken 14 wird, wie bereits erwähnt, die unterste Kaffeeportion 21 freigegeben, welche dann unter der Einwirkung der Schwerkraft nach unten in die Brüheinheit fällt. Mit dem Betätigen des Elektromagneten wird also die unterste, sich über der Brüheinheit befindliche Kaffeeportion 21 zum Aufbrühen freigegeben und die nächstfolgende Kaffeeportion 22 gehalten. Die ganze Einrichtung ist so ausgelegt, dass die Wippe nur auf die Betätigungsstangen der jeweiligen, auf die Brühkammer ausgerichteten Kartusche einwirkt. Dadurch wird sichergestellt, dass die unterste Kaffeeportion nur dann freigegeben wird bzw. werden kann, wenn sie sich exakt über der Brühkammer befindet.

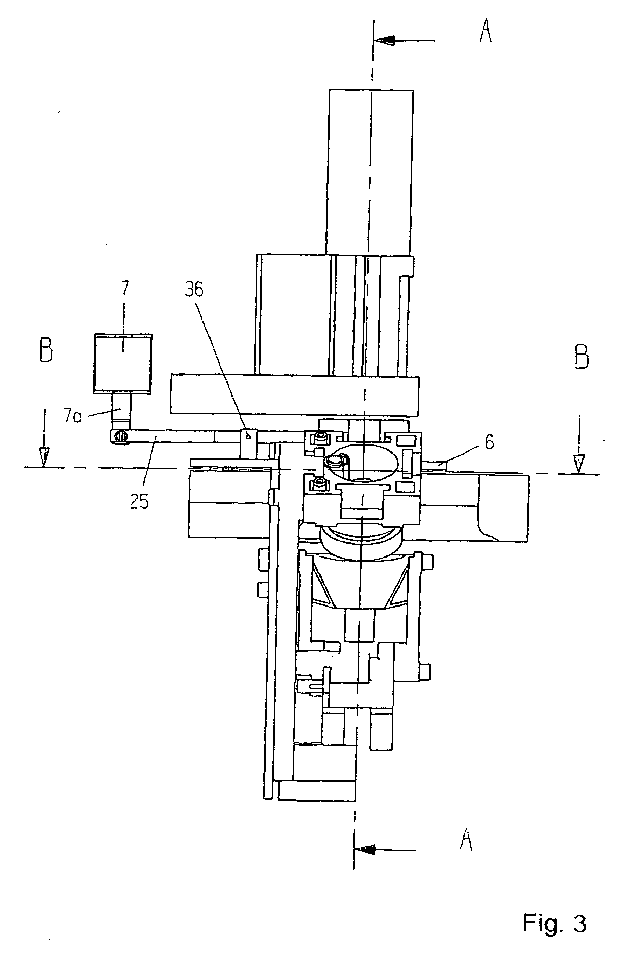

Fig. 3 zeigt die Einrichtung gemäss Fig. 1 in einer Seitenansicht. Aus dieser Darstellung ist der Elektromagnet 7 sowie die Wippe 25 ersichtlich. Die Wippe 25 ist in einer Lagerstelle 36 drehbar abgestützt und bildet einen Teil eines Hebelmechanismus zur Betätigung der Klinken. Der Elektromagnet 7 selber ist an nicht näher dargestellten Elementen befestigt. Ein Betätigen des Elektromagneten 7 bewirkt, dass sich dessen Anker 7a nach unten verschiebt, wodurch die Wippe 26 um ihren Drehpunkt verschwenkt wird, so dass sie auf der linken Seite nach unten und auf der rechten Seite nach oben kippt.

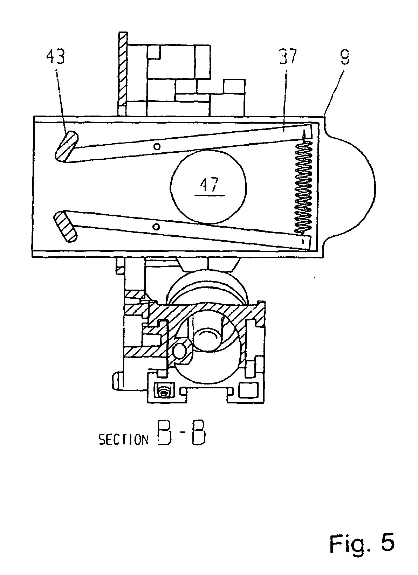

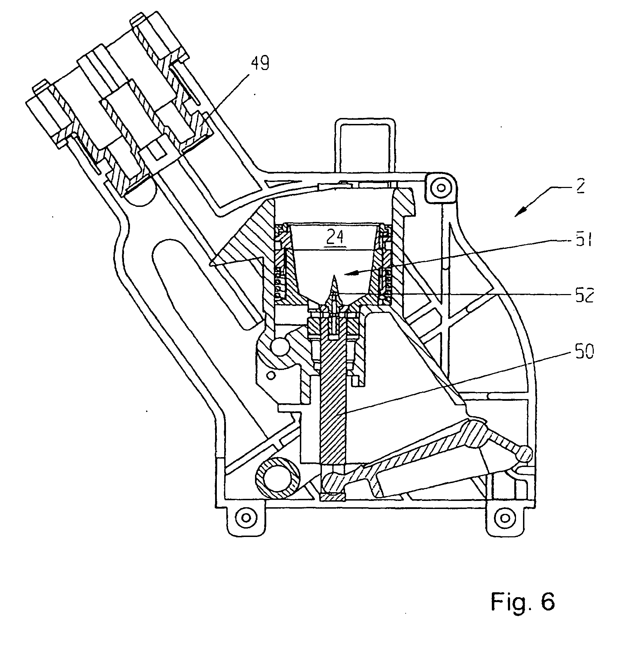

Figur 4 zeigt eine Draufsicht auf das Schubladenelement 9 zum Zuführen einer einzelnen Kaffeeportion im ausgezogenen und Figur 6 im eingeschobenen Zustand. Das manuell bewegbare Schubladenelement 9 weist zwei an einer Lagerstelle 39 drehbar abgestützte Gabeln 37 auf, welche mittels einer Zugfeder 46 belastet sind und in der dargestellten Ruhestellung parallel zueinander verlaufen. In dieser Ruhestellung überdekken die Gabeln 37 eine in das Schubladenelement 9 eingelassene Öffnung 47 geringfügig. Die der Zugfeder 46 abgewandten Stirnflächen 41 dieser Gabeln 37 sind schräg ausgebildet. Die Öffnung 47 dient gleichzeitig als Positionierhilfe beim Einlegen einer Kaffeeportion, damit die Kaffeeportion in einervorbestimmten Position im Schubladenelement 9 aufgenommen wird. Der Durchmesser dieser Öffnung 47 ist dabei geringfügig grösser als der grösste Aussendurchmesser der Kaffeeportionen. Im eingeschobenen Zustand des Schubladenelements 9 fluchtet die Öffnung 47 mit der Brühkammer 24 und mit der sich in der Wirkstellung befindlichen Kartusche 4 (Fig. 2). Auf der Hinterseite der Einrichtung sind zwei Kulissenelemente 43 angeordnet, an welchen sich die Gabeln 37 mit ihrer angeschrägten Stirnseite 41 im eingeschobenen Zustand des Schubladenelements 9 anlegen und diesen eine der Kraft der Feder 46 entgegenstehende Schwenkbewegung aufzwingen. Aus der Figur 5, welche das Schubladenelement im vollständig eingeschobenen Zustand zeigt, ist ersichtlich, dass die Gabeln 37 durch diese Kulissenelemente 43 entgegen der Federkraft soweit verschwenkt werden, dass sie eine mit ihrem Rand auf den Gabeln 37 aufliegende Kaffeeportion 10 (Fig. 2) freigeben. In dieser Stellung überlappen die Gabeln 37 die Öffnung 47 nicht mehr.

Figur 6 zeigt einen Längsschnitt durch die Brüheinheit 2. Diese weist eine verschwenkbare Brühkammer 24 und einen ortsfest angeordneten Verschlusskolben 49 auf. Der Verschlusskolben 49 ist mit einer Vielzahl von prismenförmigen Erhebungen (nicht eingezeichnet) versehen, zwischen welchen eine Vielzahl von Bohrungen (nicht eingezeichnet) angeordnet sind, über welche das aufgebrühte Kaffeegetränk aus der Brühkammer 24 austreten und durch den Verschlusskolben 49 hindurch über nicht näher dargestellte Leitungen zum eigentlichen Getränkeauslass fliessen kann. Ein relativ zur Brühkammer 24 verschiebbarer Stössel 50 durchsetzt den Boden der Brühkammer 24. Auf der Vorderseite weist dieser Stössel 50 ein hohles Aufstechelement 51 auf, das mit radialen Bohrungen 52 versehen ist.

Das Zuführen einer Kaffeeportion zum Aufbrühen eines Kaffeegetränks geht mit der gezeigten Einrichtung folgendermassen vonstatten, wobei nur auf die im Zusammenhang mit der Erfindung relevanten Bestandteile eingegangen wird und die Kaffeemaschine als solches nicht näher dargestellt ist. Zuerst wird diejenige Kartusche 4 durch manuelles Drehen des Drehtellers 5 in die Wirkstellung gebracht, welche die gewünschten Kaffeesorte enthält. Im Sichtfenster 12 kann der Benutzer überprüfen, welche Kaffeesorte in der sich in der Wirkstellung befindlichen Kartusche 4 aufgenommen ist und welche Kaffeeportion als nächstes aus der Kartusche 4 in die Brühkammer 24 überführt wird. Danach wird der Aufbrühvorgang in bekannter Weise durch Betätigen eines entsprechenden Bedienknopfes an der Kaffeemaschine gestartet. Dadurch wird der Elektromagnet 7 aktiviert, welcher über den Hebelmechanismus 7, 26, 27 die Klinken 14 verschwenkt, so dass die unterste Kaffeeportion 21 freigegeben wird und diese unter der Einwirkung der Schwerkraft in die Brühkammer 24 fällt. Nachdem die Kaffeeportion 21 freigegeben wurde, wird der Elektromagnet deaktiviert, so dass die Klinken 14 unter der Einwirkung der federbelasteten Betätigungsstangen 26 in ihre Ausgangsstellung zurückschwenken. Beim Zurückschwenken der Klinken 14 rücken die Kaffeeportionen nach, indem die oberen Auflageflächen 18 nunmehr unterste Kaffeeportionen freigeben und diese an den unteren Auflageflächen 16 zur Auflage kommt. Die Brühkammer 24 wird danach durch nicht näher dargestellte Mittel nach links verschwenkt und nach oben gegen den Verschlusskolben 49 gefahren und von diesem auf der Oberseite verschlossen. Danach wird der Stössel 50 hochgefahren, so dass dessen Spitze 51 den Boden der Kaffeeportion durchdringt. Nun wird über diese Spitze 51 Brühwasser zugeführt, welches über die radialen Bohrungen 52 aus der Spitze 51 austritt. Unter der Einwirkung des hydraulischen Brühdrucks wird die Kaffeeportion nach oben gedrückt, so dass die prismenförmigen Erhebungen den Deckel der Kaffeeportion durchstossen. Das Brühwasser kann nun die Kaffeeportion bzw. das darin aufgenommene Kaffeepulver durchströmen und über die zwischen den prismenförmigen Erhebungen angeordneten Bohrungen durch den Verschlusskolben hindurch zum Getränkeauslass strömen. Danach wird die Brühkammer 24 wieder in die Ausgangsstellung bewegt und die ausgelaugte Kaffeeportion mittels des hochfahrenden Stössels 50 aus der Brühkammer 24 ausgeworfen.

Die hydraulische Beaufschlagung der sich in der Brühkammerbefindlichen Kaffeeportion wird gleichzeitig auch zum Abdichten der Kaffeeportion gegenüber der Brühkammer genutzt, indem die einwirkenden Kräfte die Kaffeeportion gegen nicht näher dargestellte Dichtmittel pressen.

Anstelle des Zuführens von Kaffeeportionen aus Kartuschen können einzelne Kaffeeportionen auch mittels des Schubladenelements 9 zugeführt werden. Dazu wird das Schubladenelement 9 ausgezogen und eine Kaffeeportion derart eingelegt, dass deren Unterteil in der Bohrung 47 aufgenommen wird. Sobald das Schubladenelement 9 vollständig eingeschoben ist, geben die Gabeln 37 die Kaffeeportion frei, und diese fällt unter der Einwirkung der Schwerkraft in die Brühkammer 24. Der Aufbrühvorgang geht danach in der vorgängig beschriebenen Weise vonstatten.

Die beschriebene Einrichtung hat den Vorteil, dass die Kaffeeportionen der Brüheinheit einfach, schnell und sauber zugeführt werden können. Durch das Vorsehen von mehreren Kartuschen können in den einzelnen Kartuschen Kaffeeportionen mit unterschiedlichen Kaffeesorten aufgenommen werden, so dass der Benutzer ggf. unter mehreren Kaffeesorten zur Herstellung eines Kaffeegetränks auswählen kann. Durch das Vorsehen eines Schubladenelements kann ausserdem eine weitere Kaffeesorte, die nicht in den Kartuschen aufgenommen ist, zum Aufbrühen eines Kaffeegetränks verwendet werden.

Alternativ zu den beschriebenen Kartuschen, welche als Bestandteil der Einrichtung 1 ausgebildet sind und manuell mit Kapseln aufgefüllt werden müssen, könnte eine Verpackung für die Kapseln vorgesehen werden, welche als Kartusche ausgebildet ist. In diesem Fall bräuchte die Kartusche natürlich nicht mehr mit Kapseln aufgefüllt zu werden, sondern die mit Kapseln gefüllte Kartusche könnte direkt in die Einrichtung 1 eingesetzt werden.

## Patentansprüche

1. Einrichtung (1) zum Zuführen von in gasdichten Kapseln abgepackten Portionen gemahlenen Kaffees in eine eine Brühkammer (34) umfassende Brüheinheit (2) zur Aufnahme und zum Aufbrühen der Kaffeeportionen, mit einem Magazin (3) für die Aufnahme der aufzubereitenden Kaffeeportionen (21, 22, 23), wobei Mittel (7, 14, 25, 26, 27) zum einzelnen Abgeben der Kaffeeportionen (21, 22, 23) in die Brüheinheit (2) vorgesehen sind, und das Magazin (3) auf einem Drehteller (5) drehbar angeordnet ist, mehrere Kartuschen (4) zur Aufnahme der in gasdichten Kapseln abgepackten Kaffeeportionen (21, 22, 23) aufnehmen kann, und durch Verdrehen des Drehtellers (5) wahlweise eine der Kartuschen (4) vertikal über die sich in der Ruhestellung befindliche Brühkammer (24) der Brüheinheit (2) bringbar ist.

2. Einrichtung (1) nach Anspruch 1, **dadurch gekennzeichnet, dass** die Mittel zum einzelnen Abgeben der Kaffeeportionen Klinken (14) umfassen, welch letztere die jeweils nächste zur Abgabe bereite Kaffeeportion (21) zu fassen bestimmt sind und diese durch gesteuerte Betätigung freigeben.

3. Einrichtung (1) nach Anspruch 2, **dadurch gekennzeichnet, dass** die Klinken (14) drehbar angeordnet sind und beiderends mit je einer Auflagefläche (16, 18) zum Fassen bzw. Abstützen einer Kaffeeportion (21, 22) versehen sind, derart dass durch das Verdrehen der Klinken (14) die gefasste unterste Kaffeeportion (21) freigegeben und die nächstfolgende Kaffeeportion (22) abgestützt wird.

4. Einrichtung (1) nach einem der vorhergehenden Ansprüche, **dadurch gekennzeichnet, dass** zwischen dem Magazin (3) für die Aufnahme der aufzubereitenden Kaffeeportionen (21, 22, 23) und der Brüheinheit (2) ein Schubladenelement (9) angeordnet ist, welches zur Aufnahme einer einzelnen Kaffeeportion (10) ausgebildet ist.

5. Einrichtung (1) nach Anspruch 4, **dadurch gekennzeichnet, dass** das Schubladenelement (9) Haltemittel (37) zum vertikalen Abstützen der aufgenommenen Kaffeeportion (10) aufweist, wobei die Haltemittel (37) die Kaffeeportion (10) beim vollständigen Einscheiben des Schubladenelements (9) freigeben, so dass diese unter Einwirkung der Schwerkraft in die Brühkammer (24) der Brüheinheit (2) fällt.

6. Einrichtung (1) nach einem der vorhergehenden Ansprüche, **dadurch gekennzeichnet, dass** ein über einen Hebelmechanismus (25, 26, 27) mit den Klinken (14) gekoppelter Elektromagnet (7) zum Betätigen der Klinken (14) vorgesehen ist.

7. Einrichtung (1) nach Anspruch 6, **dadurch gekennzeichnet, dass** der Hebelmechanismus eine drehbar gelagerte Betätigungswippe (25) aufweist, welche auf der einen Seite mit dem Magneten (7) und auf der anderen Seite mit vertikal verlaufenden Betätigungsstangen (26) in Wirkverbindung steht, wobei die Betätigungsstangen (26) derart mit den Klinken (14) gekoppelt sind, dass diese beim Aktivieren des Magneten (7) um einen Drehpunkt (14a) verschwenken und dabei die unterste Kaffeeportion (21) freigeben währenddem sie gleichzeitig die vertikal darüber liegende Kaffeeportion (22) abstützen.

8. Einrichtung (1) nach einem der vorhergehenden Ansprüche, **dadurch gekennzeichnet, dass** zumindest ein Sensor zur elektronischen Erkennung der in den Kartuschen aufgenommen Kaffeeportionen vorgesehen ist.

9. Einrichtung (1) nach einem der vorhergehenden Ansprüche, mit einer Brüheinheit (2) zur Aufnahme und zum Aufbrühen der Kaffeeportionen, **dadurch gekennzeichnet, dass** die Brüheinheit (2) eine zwischen einer Ruhe und einer Wirkstellung verschwenkbare Brühkammer (24) sowie einen ortsfesten Verschlusskolben (49) aufweist.

10. Einrichtung (1) nach Anspruch 9, **dadurch gekennzeichnet, dass** der Verschlusskolben (49) mit einer Vielzahl von Erhebungen zur Perforation der in der Brühkammer (24) aufgenommenen Kaffeeportion sowie mit einer Vielzahl von Bohrungen zur Durchleitung des aufgebrühten Kaffeegetränks versehen ist.

11. Einrichtung (1) nach Anspruch 9 oder 10, **dadurch gekennzeichnet, dass** ein den Boden der Brühkammer (24) durchsetzender Stössel (50) vorgesehen ist, der relativ zur Brühkammer (24) verschiebbar ist und auf seiner Vorderseite mit einem hohlen Aufstechelement (51) versehen ist, das radiale Bohrungen (52) zur Einleitung von heissem Brühwasser in die Kaffeeportion aufweist.

12. Einrichtung (1) nach Anspruch 11, **dadurch gekennzeichnet, dass** der Stössel (50) als Austossorgan zum Auswerfen der ausgelaugten Kaffeeportion ausgebildet ist.

13. Einrichtung (1) nach einem der vorhergehenden Ansprüche, **dadurch gekennzeichnet, dass** die einzelnen Kaffeeportionen in einer als Kartusche dienenden Verpackung aufgenommen sind.

## Claims

1. Apparatus (1) for feeding portions of ground coffee packaged in gas-tight capsules into a brewing unit (2), comprising a brewing chamber (34), for accommodating and infusing the coffee portions, having a magazine (3) for accommodating the coffee portions (21, 22, 23) which are to be prepared, in which means (7, 14, 25, 26, 27) are provided for discharging the coffee portions (21, 22, 23) individually into the brewing unit (2), and the magazine (3) is arranged rotatably on a turntable (5), can accommodate a plurality of cartridges (4) for accommodating coffee portions (21, 22, 23) packaged in gas-tight capsules, and by virtue of the turntable (5) being rotated, optionally one of the cartridges (4) can be moved vertically over the brewing chamber (24), of the brewing unit (2), located in the rest position.

2. Apparatus (1) according to Claim 1, **characterized in that** the means for discharging the coffee portions individually comprise catches (14) which are intended for gripping the respectively next coffee portion (21) which is ready for discharging and release said coffee portion by controlled actuation.

3. Apparatus (1) according to Claim 2, **characterized in that** the catches (14) are arranged rotatably and are provided at both ends with in each case one bearing surface (16, 18) for respectively gripping and supporting a coffee portion (21, 22) such that, by virtue of the catches (14) being rotated, the gripped, lowermost coffee portion (21) is released and the next-following coffee portion (22) is supported.

4. Apparatus (1) according to one of the preceding claims, **characterized in that** arranged between the brewing unit (2) and the magazine (3) for accommodating the coffee portions (21, 22, 23) which are to be prepared is a drawer element (9), which is designed for accommodating an individual coffee portion (10).

5. Apparatus (1) according to Claim 4, **characterized in that** the drawer element (9) has retaining means (37) for vertically supporting the coffee portion (10) accommodated, the retaining means (37) releasing the coffee portion (10) when the drawer element (9) is pushed in to the full extent, with the result that, under the action of the gravitational force, said coffee portion drops into the brewing chamber (24) of the brewing unit (2).

6. Apparatus (1) according to one of the preceding claims, **characterized in that** an electromagnet (7) coupled to the catches (14) via a lever mechanism (25, 26, 27) is provided for actuating the catches (14).

7. Apparatus (1) according to Claim 6, **characterized in that** the lever mechanism has a rotatably mounted actuating rocker (25) which is in operative connection, on one side, with the magnet (7) and, on the other side, with vertically running actuating rods (26), the actuating rods (26) being coupled to the catches (14) such that, when the magnet (7) is activated, said catches pivot about a point of rotation (14a) and release the lowermost coffee portion (21) in the process, while they simultaneously support the coffee portion (22) located vertically above.

8. Apparatus (1) according to one of the preceding claims, **characterized in that** there is provided at least one sensor for the electronic sensing of the coffee portions accommodated in the cartridges.

9. Apparatus (1) according to one of the preceding claims, having a brewing unit (2) for accommodating and for infusing the coffee portions, **characterized in that** the brewing unit (2) has a brewing chamber (24), which can be pivoted between a rest position and an operative position, and a stationary closure piston (49).

10. Apparatus (1) according to Claim 9, **characterized in that** the closure piston (49) is provided with a multiplicity of elevations for perforating the coffee portion accommodated in the brewing chamber (24) and with a multiplicity of bores for the through-passage of the infused coffee drink.

11. Apparatus (1) according to Claim 9 or 10, **characterized in that** there is provided a push rod (50) which passes through the base of the brewing chamber (24), can be displaced relative to the brewing chamber (24) and, on its front side, is provided with a hollow piercing element (51) which has radial bores (52) for introducing hot brewing water into the coffee portion.

12. Apparatus (1) according to Claim 11, **characterized in that** the push rod (50) is designed as an ejecting element for ejecting the used-up coffee portion.

13. Apparatus (1) according to one of the preceding claims, **characterized in that** the individual coffee portions are accommodated in a pack serving as a cartridge.

## Revendications

1. Dispositif (1) destiné à délivrer des portions de café moulu conditionnées dans des capsules étanches au gaz dans une unité de breuvage (2) comportant une chambre de breuvage (34) destinée à recevoir et infuser les portions de café, avec un magasin (3) pour la réception de portions de café (21, 22, 23) à préparer, des moyens (7, 14, 25, 26, 27) étant prévus pour la remise individuelle des portions de café (21, 22, 23) dans l'unité de breuvage (2), et le magasin (3) étant disposé de façon rotative sur un plateau tournant (5), pouvant recevoir plusieurs cartouches (4) destinées à recevoir des portions de café (21, 22, 23) conditionnées dans des capsules étanches au gaz, et la rotation du plateau tournant (5) permettant d'amener au choix une des cartouches (4) verticalement au-dessus de la chambre de breuvage (24) de l'unité de breuvage (2) se trouvant dans la position de repos.

2. Dispositif (1) selon la revendication 1, **caractérisé en ce que** les moyens de remise individuelle des portions de café comprennent des cliquets (14) qui sont destinés à retenir la portion de café (21) suivante prête à la remise, et à la libérer par commande automatique.

3. Dispositif (1) selon la revendication 2, **caractérisé en ce que** les cliquets (14) sont disposés de façon rotative, et sont dotés aux deux extrémités respectivement d'une surface de pose (16, 18) pour la prise ou le soutien d'une portion de café (21, 22), de telle sorte que la rotation des cliquets (14) libère la portion de café (21) retenue en dessous, et soutient la portion de café (22) suivante.

4. Dispositif (1) selon l'une quelconque quelconque des revendications précédentes, **caractérisé en ce que**, entre le magasin (3) pour la réception des portions de café (21, 22, 23) à préparer et l'unité de breuvage (2) est disposé un élément de tiroir (9) qui est configuré pour la réception d'une portion individuelle de café (10).

5. Dispositif (1) selon la revendication 4, **caractérisé en ce que** l'élément de tiroir (9) comprend des moyens de fixation (37) pour le soutien vertical de la portion de café (10) reçue, moyennant quoi les moyens de fixation (37) libèrent la portion de café (10) lorsque l'élément de tiroir (9) est entièrement coulissé à l'intérieur, si bien que celle-ci tombe dans la chambre de breuvage (24) de l'unité de breuvage (2) sous l'effet de la pesanteur.

6. Dispositif (1) selon l'une quelconque des revendications précédentes, **caractérisé en ce qu'**un électroaimant (7) couplé aux cliquets (14) via un mécanisme de levier (25, 26, 27) est prévu pour la commande des cliquets (14).

7. Dispositif (1) selon la revendication 6, **caractérisé en ce que** le mécanisme de levier comprend une bascule de commande (25) logée de façon rotative qui est en relation effective sur une face avec l'aimant (7) et sur l'autre face avec des tiges de commande (26) s'étendant verticalement, moyennant quoi les tiges de commande (26) sont couplées aux cliquets (14) de sorte que celles-ci pivotent lors de l'activation de l'aimant (7) autour d'un point de rotation (14a) et libèrent ainsi la portion de café (21) inférieure, tout en soutenant la portion de café (22) située verticalement au-dessus.

8. Dispositif (1) selon l'une quelconque des revendications précédentes, **caractérisé en ce qu'**il est prévu au moins un capteur de reconnaissance électronique des portions de café contenues dans les cartouches.

9. Dispositif (1) selon l'une quelconque des revendications précédentes, avec une unité de breuvage (2) pour la réception et l'infusion des portions de café, **caractérisé en ce que** l'unité de breuvage (2) comporte une chambre de breuvage (24) orientable entre une position de repos et une position d'action, ainsi qu'un piston d'obturation (49) stationnaire.

10. Dispositif (1) selon la revendication 9, **caractérisé en ce que** le piston d'obturation (49) est doté d'une pluralité d'élévations pour la perforation de la portion de café contenue dans la chambre de breuvage (24), ainsi qu'une pluralité d'orifices pour le passage du café infusé.

11. Dispositif (1) selon la revendication 9 ou 10, **caractérisé en ce qu'**un coulisseau (50) traversant le fond de la chambre de breuvage (24) est prévu, lequel peut être coulissé par rapport à la chambre de breuvage (24) et est doté sur sa face avant d'un élément de percement (51) creux comprenant des orifices (52) radiaux pour l'introduction d'eau chaude d'infusion dans la portion de café.

12. Dispositif (1) selon la revendication 11, **caractérisé en ce que** le coulisseau (50) est configuré comme un organe d'évacuation pour l'éjection de la portion de café extraite.

13. Dispositif (1) selon l'une quelconque des revendications précédentes, **caractérisé en ce que** les portions de café individuelles sont contenues dans un conditionnement servant de cartouche.
